Europäisches Patentamt

European Patent Office

Office européen des brevets

(11) Numéro de publication: **0 216 698**
**B1**

# FASCICULE DE BREVET EUROPÉEN

(45) Date de publication du fascicule du brevet:
10.08.88

(51) Int. Cl.⁴: **C 03 B 7/06**

(21) Numéro de dépôt: 86402013.6

(22) Date de dépôt: 15.09.86

(54) Dispositif pour améliorer le chauffage d'un canal de distribution de verre et procédé pour la mise en oeuvre d'un tel dispositif.

(30) Priorité: 20.09.85 FR 8513949

(43) Date de publication de la demande:
01.04.87 Bulletin 87/14

(45) Mention de la délivrance du brevet:
10.08.88 Bulletin 88/32

(84) Etats contractants désignés:
AT BE CH DE FR GB IT LI LU NL SE

(56) Documents cité:
FR-A-1 450 020
FR-A-1 479 461

(73) Titulaire: L'AIR LIQUIDE, SOCIETE ANONYME POUR L'ETUDE ET L'EXPLOITATION DES PROCEDES GEORGES CLAUDE, 75, Quai d'Orsay, F-75321 Paris Cédex 07 (FR)

(72) Inventeur: Desprez, Marc, 41, rue de Marnes, F-92410 Ville d'Avray (FR)
Inventeur: Roux, Michel, 1, rue Schlumberger, F-92430 Marnes- La- Coquette (FR)

(74) Mandataire: Vesin, Jacques, L'AIR LIQUIDE, SOCIETE ANONYME POUR L'ETUDE ET L'EXPLOITATION DES PROCEDES GEORGES CLAUDE 75, quai d'Orsay, F-75321 Paris Cédex 07 (FR)

EP 0 216 698 B1

**0 216 698**

## Description

La présente invention concerne un dispositif pour améliorer le chauffage d'un canal de distribution du verre, ledit dispositif comportant une canalisation cylindrique reliée à son extrémité amont à des moyens d'alimentation en prémélange d'air et de gaz combustible et dont l'extrémité aval débouche à l'intérieur d'un alésage cylindrique dans un bloc réfractaire inséré dans une paroi du canal, ledit alésage cylindrique se prolongeant par un conduit axial cylindrique mais de diamètre inférieur à celui dudit alésage, la canalisation cylindrique étant coiffée par une bague d'étanchéité qui recouvre la face de l'alésage cylindrique dans lequel ladite canalisation pénètre.

Un dispositif de ce type est connu par document de brevet US-A-3 523 871.

Une ligne de fabrication continue du verre comprend successivement un atelier de composition dans lequel on mélange les matières premières qui sont introduites dans le four de fusion, puis un avant bassin dans lequel le verre fondu passe en vue d'être soumis à un dégazage, puis un ou plusieurs canaux de distribution reliés à des machines de formage. Ces canaux de distribution ont deux fonctions, à savoir transporter le verre fondu et le conditionner en température.

Le transport du verre fondu est assuré par gravité et l'écoulement de celui-ci se fait à faible vitesse de l'ordre de quelques mètres par heure.

Le conditionnement en température du verre est la fonction la plus importante du canal de liaison (ou "feeder" selon l'appellation anglo-saxone): c'est elle qui permet de fabriquer un produit de qualité élevée et régulière. Cette fonction de conditionnement se compose notamment de trois sous-fonctions:

.Modification de la température du verre fondu: en général, refroidissement du verre de la température du four à la température de formage (dans certains cas réchauffement du verre).

.Homogénéisation de la température du verre, afin de limiter les gradients transversaux et verticaux de température.

.Régulation de la température du verre délivré aux machines de formage.

La première sous-fonction peut être réalisée de deux manières différentes:

1) On refroidit violemment le verre pendant une courte durée puis on le laisse s'homogénéiser en température. Cette méthode nécessite des moyens de refroidissement internes (ventilation, circulation d'eau) qui réduisent le rendement effectif des équipements de chauffage installé pour maintenir un niveau de température suffisant dans le canal. De plus, cette technique demande une certaine connaissance des écoulement du verre dans le canal de façon à éviter les gradients transversaux de température trop importants.

2) On refroidit d'une façon continue et très lente le verre. Avec cette technique on a uniquement recours au refroidissement naturel dû aux pertes dans les parois du canal.

Pour réaliser la deuxième sous-fonction (homogénéisation de la température du verre), il est nécessaire de réchauffer les zones marginales de la surface supérieure de la veine de verre, car les couches extérieures de cette veine se refroidissent beaucoup plus vite que le coeur, du fait que le verre est un bon isolant et que dans une masse de verre même chaud, les transferts de chaleur sont faibles. Les brûleurs utilisés pour réchauffer les zones marginales de la veine de verre sont généralement alimentés à partir d'une nourrice contenant un prémélange d'air froid et du gaz combustible utilisé, ce qui présente un certain danger en cas d'extinction de la flamme.

Pour réaliser la troisième sous-fonction qui est rendue nécessaire pour obtenir une qualité constante du produit fini, le canal comporte plusieurs zones successives dont le chauffage est piloté globalement à partir d'une seule sonde de température.

Dans un feeder destiné au verre en fusion, le verre s'écoule habituellement dans un canal réfractaire qui est isolé sur les côtés et à sa partie inférieure, en direction d'une cuvette d'alimentation placée à son extrémité aval. Pour les débits relativement faibles, de la chaleur est généralement fournie au moyen de brûleurs montés dans les parois latérales des feeders afin de chercher à maintenir le verre en fusion à la température désirée pour sa distribution dans la cuvette. Au débit d'écoulement plus élevé, de petites quantités de chaleur peuvent être appliquées de façon sélective, et une élimination de chaleur est nécessaie pour le débit accru comme cela est le cas dans les feeders actuellement construits.

Pour réaliser des économies d'énergie en réduisant le ballast d'azote contenu dans le fumées dégagées par un brûleur et augmenter la température réelle de la flamme d'un brûleur, il est connu d'utiliser l'oxygène que l'on mélange au gaz combustible en plus ou moins grande quantité. Différentes méthodes bien connues peuvent être envisagées pour cette adjonction d'oxygène à un prémélange d'air et de gaz combustible:

La dilution qui consiste à mélanger dans la canalisation d'amenée du mélange air-gaz combustible, l'oxygène supplémentaire. La multitude de brûleurs constituant une zone du feeder conduirait à des problèmes de sécurité si l'on introduisait de l'oxygène pur dans la nourrice de prémélange, compte-tenu du déplacement des limites d'inflammabilité dudit mélange, de l'augmentation de la vitesse de déflagration en rapport avec une réduction de la vitesse de passage du mélange dans la nourrice et le brûleur. En effet, si l'on introduit un volume d'oxygène, il faut réduire la quantité d'air de cinq volumes, donc modifier le débit, c'est-à-dire la vitesse du mélange dans les canalisations. En pratique, cette solution n'est donc pas acceptable.

Une seconde méthode consiste à utiliser une lance d'injection d'oxygène pur, c'est-à-dire amener par un tuyau séparé du brûleur de l'oxygène pur à proximité de la flamme du brûleur. Cette technique est particulièrement complexe, compte-tenu de la faible distance entre le brûleur et le bain de verre qui ne permet pas un implantation aisée desdites lances, de la faible largeur du canal d'alimentation nécessitant un mélange

2

## 0 216 698

rapide de la flamme et de l'oxygène, du nombre important de trous à pratiquer dans la paroi latérale du feeder pour y installer les lances. Par conséquent, une telle solution nécessite d'importantes modifications dans les installations existantes.

Une troisième méthode consiste à utiliser des brûleurs oxycombustibles. L'utilisation de tels brûleurs nécessite cependant une conception nouvelle du feeder pour éviter la surchauffe des pièces réfractaires, compte-tenu de la température très élevée à la base de la flamme des brûleurs oxycombustibles. Cette solution ne permet donc pas une adaptation aux canaux d'alimentation en verre tels qu'ils sont réalisés dans les installations en fonctionnement.

Actuellement, se pose donc le problème de l'utilisation de l'oxygène dans les brûleurs air-gaz combustible placés dans les feeders, de manière à utiliser les installations existantes sans modification, tout en profitant des améliorations apportées par l'utilisation d'un comburant suroxygéné.

L'invention permet de résoudre le problème ainsi posé. Le dispositif selon l'invention est caractérisé en ce qu'il comporte un tube capillaire disposé coaxialement à ladite canalisation et dont le diamètre est inférieur au diamètre de ladite canalisation, ledit tube capillaire étant relié à son extrémité amont à des moyens d'alimentation en oxygène et débouchant à l'extrémité aval de ladite canalisation entre l'extrémité du conduit coaxial cylindrique situé du côté dudit canal et l'extrémité aval de ladite canalisation.

De préférence, ce dispositif dans lequel le diamètre du tube capillaire est inférieur à celui de conduit coaxial cylindrique, est caractérisé en ce que ledit tube capillaire débouche dans ledit conduit coaxial cylindrique.

Le diamètre du tube capillaire sera de préférence égal à:

$$d = \sqrt{\frac{Q}{0,5(P+1)}},$$

d étant exprimé en millimètre, Q étant le débit minimum d'oxygène suivant la teneur souhaitée en oxygène du comburant, exprimée en $Nm^3/h$, P la pression relative d'alimentation de l'oxygène exprimée en bars, P étant supérieure à 1 bar.

L'invention concerne également un procédé pour la fabrication d'objets en verre dans lequel le verre issu d'un four de fusion s'écoule vers une machine pour le formage desdits objets, par l'intermédiaire d'un canal de distribution, ledit canal comportant au moins un dispositif brûleur pour chauffer et maintenir à une température prédéterminée la veine de verre en fusion s'écoulant dans ledit canal, ledit procédé étant caractérisé en ce que l'un au moins des dispositifs brûleurs est conforme au dispositif décrit ci-dessus, le débit d'oxygène issu des moyens d'alimentation en oxygène étant tel que la concentration volumique ψ en oxygène du comburant, après mélange de l'oxygène et du prémélange, dans les conditions normales de température et de pression, reste sensiblement inférieure ou égale à 30 %.

Le pilotage des différents dispositifs brûleurs s'effectue, de préférence, de la manière décrite ci-après. Les dispositifs brûleurs selon l'invention sont essentiellement destinés à se substituer aux brûleurs existant dans les feeders. Ils sont alimentés par un prémélangeur connecté aux canalisations d'air et de gaz combustible, assurant un rapport constant des débits d'air et de gaz combustible. Le pilotage des brûleurs selon l'invention par le même prémélangeur dont on changerait le réglage pour chaque variation du débit d'oxygène (voir ci-après) poserait des problèmes importants: Celui-ci est en effet préréglé pour un certain rapport air/gaz combustible et il est difficile alors de faire varier simultanément, dans les prémélangeurs disponibles dans le commerce, le débit d'air et de gaz combustible dans des proportions différentes.

Selon un mode préférentiel de réalisation, le procédé selon l'invention est caractérisé en ce que l'on alimente l'ensemble des dispositifs brûleurs à l'aide d'un prémélange d'air et de gaz combustible dans un rapport prédéterminé et selon un débit réglable, tandis que les dispositifs brûleurs sont également alimentés d'une part en oxygène et d'autre part en gaz combustible, additionné au prémélange, dont les débits respectifs sont dans ledit rapport prédéterminé.

L'invention sera mieux comprise à l'aide des exemples de réalisation suivants, donnés à titre non limitatif, conjointement avec les figures qui représentent:
- la figure 1, un exemple d'un canal de distribution de verre selon l'art antérieur, muni de brûleurs air-gaz;
- la figure 2, une variante de la figure 1, selon l'art antérieur;
- la figure 3, une vue en coupe schématique d'un dispositif selon l'invention adapté au chauffage des canaux de distribution de verre;
- la figure 4, un schéma de réalisation d'un système de pilotage d'un dispositif selon la figure 3.

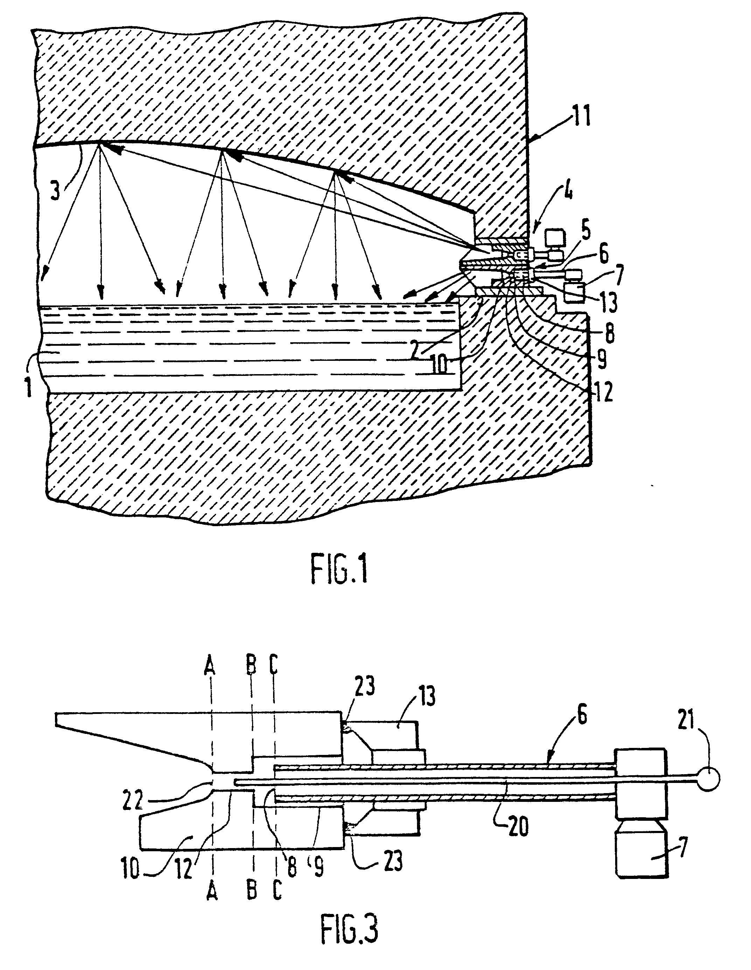

Sur la figure 1, est représentée une première variante de chauffage de canux de distribution de verre selon le brevet américain 3 523 871. Le canal de distribution 2 dans lequel s'écoule le verre 1 est surmonté d'une voûte réfractaire 3. Dans la paroi latérale 11 de ce canal ou feeder, sont logés respectivement deux brûleurs 4 et 5 identiques, le brûleur 4 étant orienté de manière à chauffer la voûte 3, tandis que le brûleur 5 est orienté de manière à chauffer les bords latéraux du canal 2. Les brûleurs air-gaz utilisés dans le brevet mentionné ci-dessus, comportent respectivement une canalisation cylindrique 6 reliée à son extrémité amont à des moyens d'alimentation 7 en prémélange d'air et de gaz combustible, et dont l'extrémité aval 8 débouche à l'intérieur d'un alésage cylindrique 9 dans un bloc réfractaire 10 inséré dans la paroi latérale 11 du canal d'alimentation 2. L'alésage cylindrique 9 se prolonge par un conduit coaxial cylindrique 12 de diamètre inférieur à celui dudit alésage 9. La canalisation cylindrique 6 est coiffée par une bague d'étanchéité 13 qui recouvre la face de l'alésage cylindrique 9 dans lequel ladite canalisation 6 pénètre.

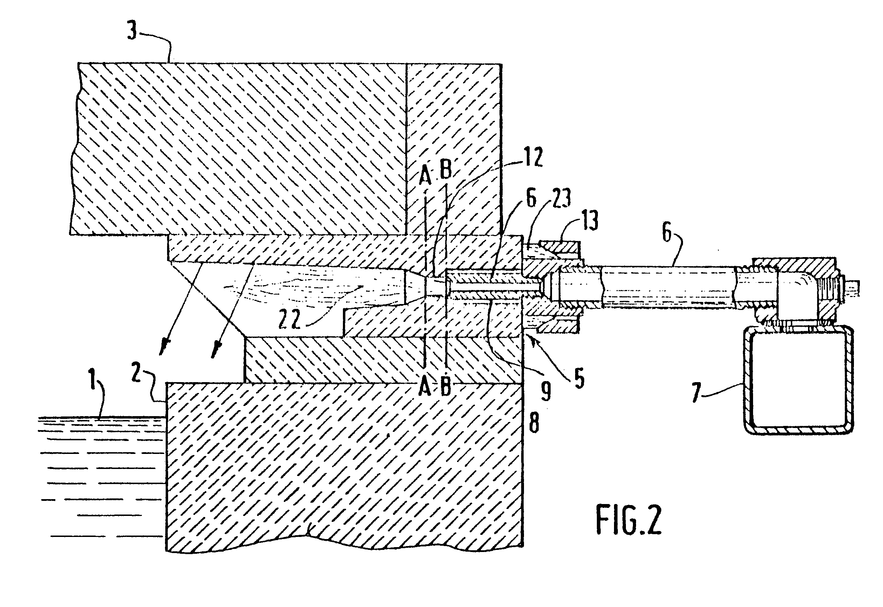

Sur la figure 2 est représentée une variante de réalisation de la figure 1, dans laquelle un seul brûleur est

3

utilisé, tandis que la voûte 3 est une voûte plate. Cette variante est également une variante de réalisation dudit brevet américain cité plus haut. Sur cette figure, les mêmes éléments que ceux de la figure précédente portent les mêmes références. On notera en particulier le joint d'étanchéité 23 entre la bague d'étanchéité 13 et la paroi latérale où débouche la face de l'alésage cylindrique 9. Sur cette figure, la canalisation cylindrique 6 arrive sensiblement jusqu'au plan B-B de séparation de l'alésage 9 et du conduit coaxial cylindrique 12, celui-ci se terminant à son autre extrémité le long du plan A-A.

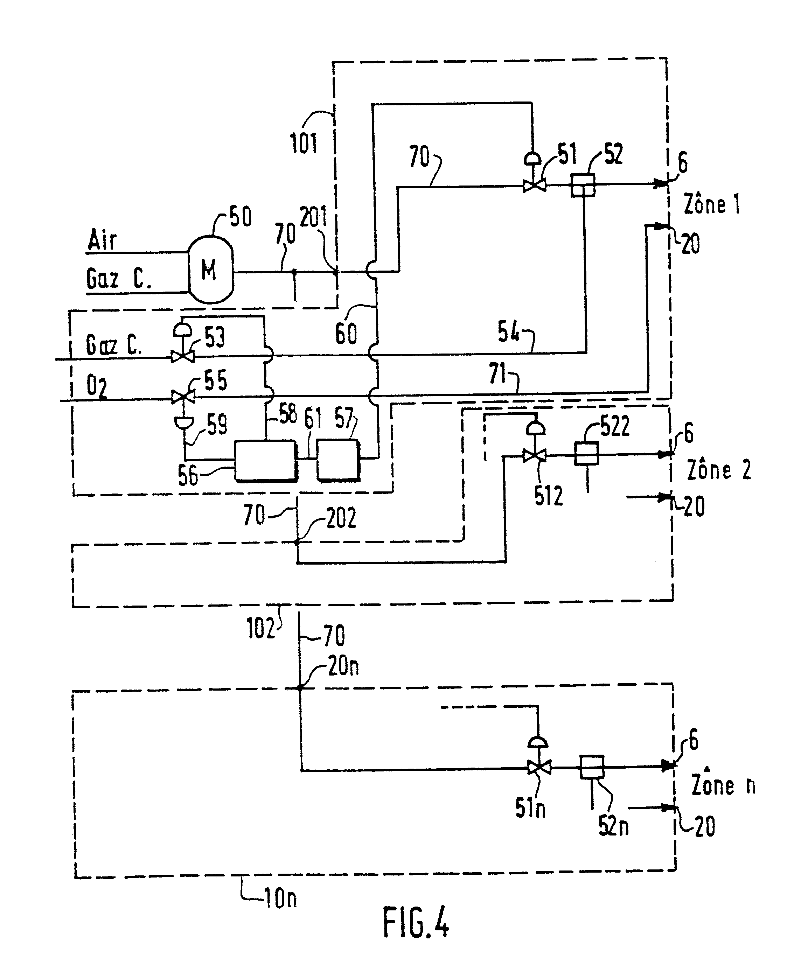

La figure 3 représente le dispositif selon l'invention et destiné à être substitué aux dispositifs 1 et/ou 5 des figures précédentes. Sur cette figure 3, les mêmes éléments que ceux des figures précédentes portent les mêmes références. Un tube capillaire 20 est disposé coaxialement à la canalisation 6, à l'intérieur de celle-ci. Le tube capillaire est relié à son extrémité amont à des moyens d'alimentation en oxygène 21. Ce tube capillaire débouche à l'extrémité aval 8 de la canalisation 6, et se prolonge jusque dans le conduit coaxial cylindrique 12. L'extrémité aval de ce tube capillaire ne doit pas d'une manière générale aller au-delà du plan A-A afin d'éviter sa détérioration, son bouchage, etc. Il doit nécessairement se situer au-delà du plan C-C représentant l'extrémité aval 8 de la canalisation 6, afin d'éviter les remontées d'oxygène dans le prémélange et les risques d'explosion qui en résulteraient. De préférence, cette extrémté aval du tube capillaire sera située dans la zone où la vitesse de circulation du prémélange est, d'une manière générale, la plus élevée possible ce qui, sur l'exemple de réalisation de la figure 3, est représenté par la zone de plus faible diamètre ou conduit coaxial cylindrique 12, située entre les plans A-A et B-B.

Concernant les différents réglages à effectuer dans un canal d'alimentation de verre, on pourra éventuellement se reporter aux brevets français 2 022 539, 2 220 480 et 2 350 309, ainsi qu'au brevet américain sus-mentionné, dont les textes sont incorporés à la description de la présente demande à titre de référence.

Les exemples ci-après permettent de montrer que la teneur en oxygène modifient considérablement le rendement de combustion des brûleurs selon l'invention:

### Exemple 1:

La vitesse d'injection de l'oxygène issu du capillaire est sonique de manière à avoir un mélange le plus rapide possible entre le prémélange air-gaz et l'oxygène. La diamètre du capillaire est donné par la formule mentionnée plus haut, c'est-à-dire:

$$d = \sqrt{\frac{Q}{0,5\,(P+1)}},$$

Compte tenu du type d'enrichissement en oxygène utilisé et afin de ne pas surchauffer le bloc brûleur, on a constaté que la concentration volumique en oxygène du comburant (air + oxygène), dans les conditions normales, ne devait pas excéder sensiblement 30 %.

On obtient, pour une température de fumées de 1200°C (valeur habituelle industriellement), un rendement qui passe de 40 % à 56,5 % du rendement de combustion d'un gaz naturel étalon, quand $\psi$ passe de 20,8 % à 30 %. De même, avec un gaz propane disponble commercialement, le rendement passe de 44,2 % à 60 %.

Si le débit initial de gaz naturel est $Q_{GNO} = 1$ associé à un débit d'air initial $Q_{AO}$, l'augmentation de rendement amènera une diminution de ce débit à QGN, d'où un débit d'air $Q_A$, un débit de prémélange $Q_{PM}$ et un débit d'$O_2$ pur $Q_{O2}$.

On obtient (avec TF = 1200°C; 2 à $O_2$ dans les fumées sèches)

| $\psi$ | : $Q_{GNO}$ | : $Q_{AO}$ Air | : $Q_{PMO}$ Prémélange | : $Q_{GN}$ | : $Q_A$ | : $Q_{PM}$ | : $Q_{O2}$ | : |
|---|---|---|---|---|---|---|---|---|
| : 0,208 | : 1 | : 10,1 | : 11,1 | : 1 | : 10,1 | : 11,1 | : 0 | : |
| : 0 22 | : | : | : | : 0,928 | : 8,73 | : 9,658 | : 0,134 | : |
| : 0,23 | : | : | : | : 0,881 | : 7,82 | : 8,701 | : 0,223 | : |
| : 0,25 | : | : | : | : 0,813 | : 6,47 | : 7,28 | : 0,362 | : |
| : 0 30 | : | : | : | : 0,708 | : 4,38 | : 5,09 | : 0,576 | : |

### Exemple 2:

Cet exemple est réalisé dans les mêmes conditions que précédemment mais avec du propane.

| $\psi$ | $Q_{CBO}$ | $Q_{AO}$ Air | $Q_{PMO}$ Prémélange | $Q_{CB}$ | $Q_A$ | $Q_{PM}$ | $Q_{O2}$ | |
|---|---|---|---|---|---|---|---|---|
| 0,208 | 1 | 25,6 | 26,6 | 1 | 25,6 | 26,6 | 0 | |
| 0,22 | | | | 0,932 | 22,25 | 23,18 | 0,342 | |
| 0,23 | | | | 0,894 | 20,16 | 21,05 | 0,576 | |
| 0,25 | | | | 0,834 | 16,85 | 17,68 | 0,944 | |
| 0,3 | | | | 0,736 | 11,57 | 12,3 | 1,52 | |

Les exemples ci-dessus montrent donc que l'enrichissement en oxygène du dispositif selon l'invention permet de réduire la quantité de gaz consommé, c'est-à-dire réaliser des économies d'énergie, le prix de l'oxygène étant généralement inférieur à celui du gaz naturel ou du propane.

Un tel dispositif présente de plus l'avantage lorsqu'une pluralité de ceux-ci sont utilisés dans un canal d'alimentation, de pouvoir moduler la suroxygénation de chacun et ainsi moduler la surchauffe locale réalisée par les différents dispositifs brûleur, sans variation de débit du prémélange air-gaz utilisé pour tous les brûleurs. Cette modulation s'effectue en effet uniquement à partir de la nourrice d'alimentation en oxygène, l'alimentation en oxygène de chacun des dispositifs devant bien entendu dans ce cas être modulable séparément (une vanne de débit réglable par tube capillaire). En outre, un tel dispositif et son procédé de mise en oeuvre permettent d'augmenter la température du verre et réchauffer préférentiellement les rives du feeder. De plus la suroxygénation permet une augmentation modérée de la température réelle de la flamme, ce qui se traduit par une augmentation modérée de la température du bloc réfractaire. Ceci se traduit par une augmentation sensible du rayonnement du bloc vers les rives du canal qui sont chauffées par rayonnement dudit bloc. (On sait que ce rayonnement est une fonction de la puissance 4 de sa température.)

La figure 4 est un exemple de réalisation d'un système de pilotage permettant de moduler pour chaque brûleur le taux de suroxygénation. A chaque zone 1, 2, ..., n du feeder correspond un dispositif brûleur selon l'invention (mais on peut également prévoir de relier le système à des brûleurs conventionnels puisque le dispositif de prémélange 50 délivre sur la canalisation 70 un mélange air/gaz combustible conventionnel). Chaque brûleur est relié par ses canalisations 6 et 20 à un module de commande 101, 102, ..., 10n. Chaque module comporte une entrée 201, 202, ..., 20n pour la canalisation 70 d'amenée de mélange air/gaz combustible issu du prémélangeur 50. Compte tenu du fait que tous les modules 101, 102, ..., 10n sont identiques, seul le module 101 a été représenté en détails et va être décrit ci-après.

La canalisation 70 est reliée à la vanne commandée 51 de réglage de débit, au mélangeur 52 dont elle sort pour être connectée à la canalisation cylindrique 6. Le dispositif mélangeur 52, bien connu de l'homme de métier, reçoit par la canalisation 54 et la vanne commandée 53 à débit réglable le gaz combustible à associer à l'oxygène (ainsi qu'on le verra plus loin). Ce dernier est envoyé dans le tube capillaire 20 par l'intermédiaire de la vanne commandée 55 à débit réglable et la canalisation 71.

La vanne commandée 51 est reliée électriquement par la connexion 60 à un dispositif électronique d'asservissement de débit 57, lui-même relié via 61 à l'opérateur de rapport 56, ce dernier étant relié électriquement aux vannes commandées 53 et 55 respectivement via les connexions 58 et 59. Lors d'une variation de position de la vanne 51, commandée manuellement ou électriquement, le dispositif d'asservissement 57 permet de faire varier proportionnellement le signal de commande envoyé vers l'opérateur de rapport 56. Celui-ci engendre le signal de variation de débit de chaque vanne 53 et 55 en maintenant le rapport (en général stoechiométrique) entre le gaz combustible et l'oxygène. Inversement, on règle le taux de suroxygénation en modifiant la proportion du dispositif d'asservissement 57. L'opérateur de rapport 56 ajuste automatiquement les débits des vannes 53 et 55 en maintenant la stoechiométrie, tandis que le dispositif 57 ajuste la puissance oxycombustible aux variations de la puissance aérocombustible commandées par la vanne 51. Un tel système de pilotage présente notamment les avantages suivants:

- aucun déréglage du prémélangeur n'est nécessaire: celui-ci fonctionne dans les conditions prévues par le constructeur,
- chaque zone peut correspondre à une suroxygénation différente et donc à une température différente. Pour cela, il suffit de choisir une proportion différente au niveau de 57, en fonction de la température voulue pour la zone correspondante. (En version manuelle, on change le débit global des vannes 53 et 55, en maintenant le même rapport).

En fonction de ce qui vient d'être décrit et en maintenant un rapport stoechiométrique oxygène (air)/gaz naturel, les tableaux des exemples 1 et 2 sont modifiés comme suit:

### Exemple 3:

(Mêmes conditions que l'exemple 1)

| $\psi$ | $Q_{GNO}$ | $Q_{AO}$ | $Q_{PMO}$ | $Q_{GN(M)}$ | $Q_A$ | $Q_{PM}$ | $Q_{GN(O2)}$ | $Q_{O2}$ | $Q_{GN(T)}$ |
|---|---|---|---|---|---|---|---|---|---|
| 0,208 | 1 | 10,1 | 11,1 | 1 | 10,1 | 11,1 | 0 | 0 | 1 |
| 0,22 | | | | 0,864 | 8,73 | 9,594 | 0,064 | 0,134 | 0,928 |
| 0,23 | | | | 0,774 | 7,82 | 8,594 | 0,107 | 0,223 | 0,881 |
| 0,25 | | | | 0,640 | 6,47 | 7,11 | 0,173 | 0,362 | 0,813 |
| 0,30 | | | | 0,434 | 4,38 | 4,814 | 0,274 | 0,576 | 0,708 |

## Exemple 4:

(Mêmes conditions que l'exemple 2)

| $\psi$ | $Q_{PO}$ | $Q_{AO}$ | $Q_{PMO}$ | $Q_{P(M)}$ | $Q_A$ | $Q_{PM}$ | $Q_{P(O1)}$ | $Q_{O2}$ | $Q_{P(T)}$ |
|---|---|---|---|---|---|---|---|---|---|
| 0,208 | 1 | 25,6 | 26,6 | 1 | 25,6 | 26,6 | 0 | 0 | 1 |
| 0,22 | | | | 0,869 | 22,25 | 23,12 | 0,063 | 0,342 | 0,932 |
| 0,23 | | | | 0,787 | 20,16 | 20,95 | 0,107 | 0,576 | 0,894 |
| 0,25 | | | | 0,658 | 16,85 | 17,51 | 0,176 | 0,944 | 0,834 |
| 0,30 | | | | 0,452 | 11,57 | 12,02 | 0,284 | 1,52 | 0,736 |

avec

$Q_{GN(M)}$ = débit combustible du prémélange 50
$Q_{P(M)}$ = débit combustible du prémélange 50
$Q_{GN(O2)}$ = debit combustible dans la vanne 53
$Q_{P(O2)}$ = débit combustible dans la vanne 53
$Q_{GN(T)}$ = débit total de gaz combustible ($G_N$ = gaz naturel)
$Q_{P(T)}$ = débit total de gaz combustible (P = propane).

## Revendications

1. Dispositif brûleur pour améliorer le chauffage d'un canal (2) de distribution du verre (1), ledit dispositif comportant une canalisation cylindrique (6) reliée à son extrémité amont à des moyens (7) d'alimentation en prémélange d'air et de gaz combustible et dont l'extrémité aval (8) débouche à l'intérieur d'un alésage cylindrique (9) dans un bloc réfractaire (10) inséré dans une paroi (11) du canal, ledit alésage cylindrique (9) se prolongeant par un conduit coaxial cylindrique (12), mais de diamètre inférieur à celui dudit alésage, la canalisation cylindrique (6) étant coiffée par une bague d'étanchéité (13) qui recouvre la face de l'alésage cylindrique (9) dans lequel ladite canalisation (6) pénètre, caractérisé en ce qu'il comporte un tube capillaire (20) disposé coaxialement à ladite canalisation (6) et dont le diamètre est inférieur au diamètre de ladite canalisation (6), ledit tube capillaire (20) étant relié à son extrémité amont à des moyens d'alimentation en oxygène (21) et débouchant à l'extrémité aval (8) de ladite canalisation (6) entre l'extrémité (22) du conduit coaxial cylindrique situé du (12) côté dudit canal et l'extrémité aval (8) de ladite canalisation (6).

2. Dispositif brûleur selon la revendication 1, dans lequel le diamètre du tube capillaire (20) est inférieur à celui du conduit coaxial cylindrique (12), caractérisé en ce que ledit tube capillaire débouche dans ledit conduit coaxial cylindrique.

3. Dispositif brûleur selon l'une des revendications 1 ou 2, caractérisé en ce que le diamètre (d) du tube capillaire est égal à:

$$d = \sqrt{\frac{Q}{0,5(P+1)}},$$

d étant exprimé en millimètre, Q étant le débit minimum d'oxygène suivant la teneur souhaitée en oxygène du comburant (exprimé en $Nm^3/h$), P la pression d'alimentation de l'oxygène, exprimée en bars, P étant supérieur à 1 bar.

4. Dispositif brûleur selon l'une des revendications 1 à 3, caractérisé en ce que les moyens d'alimentation en prémélange d'air et de gaz combustible comportent un prémélangeur (50) ayant un rapport volumique constant entre l'air et le gaz combustible, ledit prémélangeur (50) étant relié, par l'intermédiaire d'une conduite (70) et d'une première vanne à débit réglable (51), à un dispositif mélangeur (52), ce dernier étant par ailleurs connecté à une canalisation (54) d'amenée de gaz combustible sur laquelle est placée une seconde vanne à débit réglable (53), ledit dispositif mélangeur (52) permettant de faire varier la quantité de gaz combustible dans le prémélange.

5. Dispositif brûleur selon la revendication 4, dans lequel on maintient un rapport stoechiométrique entre l'oxygène et le gaz combustible, caractérisé en ce que des moyens d'asservissement (56, 57) de la vanne de débit de gaz combustible (53) et de la vanne de débit d'oxygène (55) à la vanne de débit du prémélangeur (51) sont prévus, permettant d'asservir le débit des vannes 53 et 55 aux variations de débit de la vanne 51.

6. Procédé pour la fabrication d'objets en verre, dans lequel le verre issu d'un four de fusion s'écoule vers un lieu de fabrication desdits objets par l'intermédiaire d'un canal (2), de distribution, ledit canal comportant au moins un dispositif brûleur (4) pour chauffer et maintenir à une température prédéterminée la veine de verre en fusion s'écoulant dans ledit canal, caractérisé en ce que l'un au moins des dispositifs brûleur (4) est conforme à l'une des revendications précédentes, le débit d'oxygène issu des moyens d'alimentation en oxygène étant tel que la concentration volumique $\psi$ en oxygène du comburant après mélange de l'oxygène et du prémélange dans les conditions normales de témpérature et de préssion, reste sensiblement inférieur ou égal à 30 %.

7. Procédé selon la revendication 6, caractérisé en ce que l'on alimente l'ensemble des dispositifs brûleurs à l'aide d'un prémélange d'air et de gaz combustible dans un rapport prédéterminé et selon un débit réglable, tandis que les dispositifs brûleurs conformes à l'une des revendications 1 à 5, sont également alimentés d'une part en oxygène et d'autre part en gaz combustible, additioné au prémélange, dont les débits respectifs sont dans ledit rapport prédéterminé.

8. Procédé selon l'une des revendications 6 ou 7, caractérisé en ce que l'on alimente tous les dispositifs brûleurs des différentes zones du feeder à l'aide de la même nourrice de prémélange d'air et de gaz combustible, selon des débits réglables, tandis que chaque dispositif brûleur est alimenté en oxygène selon un débit réglable en fonction de la température souhaitée de la flamme dans la zone correspondante, un opérateur de rapport permettant d'asservir le réglage du débit de l'oxygène au réglage de débit de gaz combustible.

## Patentansprüche

1. Brennervorrichtung zur Verbesserung der Heizung eines Kanales (2) für die Verteilung von Glas (1), wobei diese Vorrichtung eine zylindrische Rohrleitung (6) aufweist, die an ihrem aufstromigen Ende mit Versorgungsmitteln (7) mit einem Vorgemisch von Luft und brennbarem Gas verbunden ist und deren abstromiges Ende (8) im Inneren einer zylindrischen Bohrung (9) in einem feuerfesten Block (10) mündet, der in eine Wand (11) des Kanals eingeführt ist, wobei sich die zylindrische Bohrung (9) durch eine zylindrische koaxiale Leitung (12) verlängert, aber mit kleinerem Durchmesser als dem der Bohrung, wobei die zylindrische Rohrleitung (6) durch einen Dichtungsring (13) bedeckt ist, welcher die Fläche der zylindrischen Bohrung (9) bedeckt, in welche die Rohrleitung (6) eindringt, dadurch gekennzeichnet, daß sie ein Kapillarrohr (20) aufweist, welches koaxial zu der Rohrleitung (6) angeordnet ist und dessen Durchmesser kleiner als der der Rohrleitung (6) ist, wobei das Kapillarrohr (20) an seinem aufstromigen Ende mit Versorgungsmitteln für Sauerstoff (21) verbunden ist und am abstromigen Ende (8) der Rohrleitung (6) zwischen dem Ende (22) der zylindrischen koaxialen Rohrleitung, die an der (12) Seite des Kanals angeordnet ist, und dem abstromseitigen Ende (8) der Rohrleitung (6) mündet.

2. Brennervorrichtung nach Anspruch 1, bei welcher der Durchmesser des Kapillarrohres (20) kleiner als der der zylindrischen koaxialen Leitung (12) ist, dadurch gekennzeichnet, daß das Kapillarrohr in der zylindrischen koaxialen Leitung mündet.

3. Brennervorrichtung nach einem der Ansprüche 1 oder 2, dadurch gekennzeichnet, daß der Durchmesser (d) des Kapillarrohres gleich ist:

$$d = \sqrt{\frac{Q}{0{,}5\,(P+1)}},$$

wobei d ausgedrückt wird in Millimetern, Q der minimale Durchsatz an Sauerstoff gemäß dem gewünschten Gehalt an Sauerstoff des Verbrennungsmittels ist (ausgedrückt in Nm$^3$/h), P der Versorgungsdruck an Sauerstoff ist, ausgedrückt in bar, wobei P größer als 1 bar ist.

4. Brennervorrichtung nach einem der Ansprüche 1 bis 3, dadurch gekennzeichnet, daß die Versorgungsmittel für das Vorgemisch von Luft und brennbarem Gas einen Vormischer (50) aufweisen, der ein konstantes volumetrisches Verhältnis zwischen der Luft und dem brennbaren Gas hat, wobei der Vormischer (50) mittels einer Leitung (70) und eines ersten Ventils (51) für regelbaren Durchsatz mit einer Mischervorrichtung (52) verbunden ist, welche außerdem mit einer Rohrleitung (54) für die Zuführung von brennbarem Gas verbunden ist, an welcher ein zweites Ventil für regelbaren Durchsatz (53) angeordnet ist, wobei die Mischervorrichtung (52) die Veränderung der Menge des brennbaren Gases im Vorgemisch erlaubt.

5. Brennervorrichtung nach Anspruch 4, bei welcher man ein stöchiometrisches Verhältnis zwischen dem Sauerstoff und dem brennbaren Gas aufrechterhält, dadurch gekennzeichnet, daß die Steuerungsmittel (56, 57) des Durchsatzventils für brennbares Gas (53) und des Durchsatzventils für Sauerstoff (55) zum Durchsatzventil des Vormischers (51) vorgesehen sind und den Durchsatz der Ventile (53 und 55) bei Veränderungen des Durchsatzes des Ventils (51) zu steuern erlauben.

6. Verfahren zur Herstellung von Glasgegenständen, bei welchem das von einem Schmelzofen stammende Glas zu einer Fabrikationsstätte dieser Gegenstände mittels eines Verteilerkanals (2) fließt, wobei der Kanal mindestens eine Brennervorrichtung (4) aufweist, um die in Schmelze befindliche Glasader, die in diesem Kanal fließt, zu erwärmen und auf einer vorbestimmten Temperatur zu halten, dadurch gekennzeichnet, daß mindestens eine der Brennervorrichtungen (4) mit einem der vorstehenden Ansprüche konform ist, wobei der Sauerstoffdurchsatz, der aus Sauerstoffversorgungsmitteln stammt, derart ist, daß die Volumenkonzentration ψ an Sauerstoff des Verbrennungsmittels nach Vermischen von Sauerstoff und Vorgemisch unter den normalen Temperatur- und Druckbedingungen im wesentlichen unter oder gleich 30 % bleibt.

7. Verfahren nach Anspruch 6, dadurch gekennzeichnet, daß man die Gesamtheit der Brennervorrichtungen mit Hilfe eines Vorgemisches von Luft und brennbarem Gas in einem vorbestimmten Verhältnis und gemäß einem regelbaren Durchsatz versorgt, während die Brennervorrichtungen, die mit einem der Ansprüche 1 bis 5 konform sind, gleichermaßen einesteils mit Sauerstoff und anderenteils mit brennbarem Gas versorgt werden, welches dem Vorgemisch zugegeben ist, deren jeweilige Durchsätze in diesem vorbestimmten Verhältnis liegen.

8. Verfahren nach einem der Ansprüche 6 oder 7, dadurch gekennzeichnet, daß man alle die Brennervorrichtungen unterschiedlicher Zonen des Feeders mit Hilfe des gleichen Speisebehälters für das Vorgemisch an Luft und brennbarem Gas gemäß regelbaren Durchsätzen versorgt, während jede Brennervorrichtung mit Sauerstoff gemäß einem regelbaren Durchsatz versorgt wird in Funktion der gewünschten Temperatur der Flamme in der entsprechenden Zone, wobei ein Verhältnisoperator die Steuerung der Regulierung des Durchsatzes an Sauerstoff zur Steuerung des Durchsatzes an brennbarem Gas erlaubt.

## Claims

1. Burner device for improving the heating of a channel (2) for distribution of glass (1), said device comprising a cylindrical duct (6) connected at its upstream end to means (7) for feeding a pre-mixture of air and fuel gas and the downstream end (8) of which opens inside a cylindrical bore (9) in a refractory block (10) inserted into a wall (11) of the channel, said cylindrical bore (9) being extended by a coaxial cylindrical duct (12), but of smaller diameter than that of the said bore, the cylindrical duct (6) being surrounded by a sealing ring (13) which covers the face of the cylindrical bore (9) into which the said duct (6) penetrates, characterised in that it comprises a capillary tube (20) disposed coaxially with respect to the said duct (6) and the diameter of which is smaller than the diameter of the said duct (6), the said capillary tube (20) being connected at its upstream end to oxygen feeding means (21) and opening at the downstream end (8) of the said duct (6) between the end (22) of the coaxial cylindrical duct (12) located adjacent the said duct and the downstream end (8) of the said duct (6).

2. Burner device according to claim 1 in which the diameter of the capillary tube (20) is smaller than that of the coaxial cylindrical duct (12), characterised in that the said capillary tube opens in the said coaxial cylindrical duct.

3. Burner device according to one of claims 1 or 2, characterised in that the diameter (d) of the capillary tube is equal to:

$$d = \sqrt{\frac{Q}{0.5(P+1)}},$$

d being expressed in mm, Q being the minimum flow of oxygen according to the desired oxygen content of the comburant (expressed in Nm³/h), P being the feed pressure of the oxygen, expressed in bars, P being greater than 1 bar.

4. Burner device according to one of the claims 1 to 3, characterised in that the means for feeding the mixture of air and fuel gas comprises a pre-mixer (50), having a constant volume ratio between the air and the fuel gas, the said pre-mixer (50) being connected by means of a duct (70) and of a first adjustable flow valve (51), to a mixer device (52) the latter also being connected to a fuel gas supply duct (54) in which is positioned a second adjustable flow valve (53), the said mixer device (52) enabling the quantity of fuel gas in the pre-mixture to be varied.

5. Burner device according to claim 4 in which a stiochiometric ratio is maintained between the oxygen and the fuel gas, characterised in that means (56, 57) are provided for subordinating the fuel gas flow valve (53) and the oxygen flow valve (55) to the pre-mixer flow valve (51), enabling the flow rate through the valves (53 and 55) to be controlled in response to variations in the flow rate through the valve (51).

6. Process for manufacturing glass articles, in which the glass originating from a melting furnace flows towards a location for producing the said articles by means of a distribution channel (2), the said channel 2 comprising at least a burner device to heat the molten glass vein flowing in said channel and maintain it at a predetermined temperature, characterised in that at least one of the burner devices (4) is in accordance with one of the preceding claims, the flow rate of oxygen coming from the oxygen feeding means being such that the volume concentration ψ of oxygen of the comburant after mixing the oxygen and the pre-mixture under normal conditions of temperature and pressure remains substantially lower than or equal to 30 %.

7. Process according to claim 6, characterised in that the assembly of burner devices is fed by means of a premixture of air and fuel gas in a predetermined ratio and according to an adjustable flow rate, while the burner devices according to one of claims 1 to 5 are also fed on the one hand with oxygen and on the other hand with fuel gas, added to the pre-mixture, the respective flow rates of which are in the said predetermined ratio.

8. Process according to one of claims 6 or 7, characterised in that all the burner devices of the different zones of the feeder are supplied by means of the same source of premixture of air and fuel gas, according to the adjustable flow rates, while each burner device is fed according to a flow rate adjustable according to the desired temperature of the flame in the corresponding zone, a ratio operator enabling the adjustment of the oxygen flow rate to be made in response to the adjustment of fuel gas flow rate.

FIG.1

FIG.3

FIG.2

FIG.4